Europäisches Patentamt

European Patent Office

Office européen des brevets

(19)

(11) Veröffentlichungsnummer: **0 268 815 B1**

# (12) EUROPÄISCHE PATENTSCHRIFT

(45) Veröffentlichungstag der Patentschrift: 06.03.91

(51) Int. Cl.⁵: **B60J 1/10, B60R 13/06**

(21) Anmeldenummer: 87115214.6

(22) Anmeldetag: 17.10.87

(54) **Anordnung für die Befestigung einer Kraftfahrzeugscheibe in der Zarge einer Kraftfahrzeugkarosserie.**

(30) Priorität: 22.11.86 DE 3639936

(43) Veröffentlichungstag der Anmeldung:
01.06.88 Patentblatt 88/22

(45) Bekanntmachung des Hinweises auf die
Patenterteilung:
06.03.91 Patentblatt 91/10

(84) Benannte Vertragsstaaten:
AT BE ES FR GB IT SE

(56) Entgegenhaltungen:
CH-A- 194 919
DE-A- 1 801 148
FR-A- 2 464 359
US-A- 3 981 697

(73) Patentinhaber: FLACHGLAS AKTIENGESELL-
SCHAFT
Otto-Seeling-Promenade 10-14
W-8510 Fürth(DE)

(72) Erfinder: Derner, Paul, Dr.
Schlüterstrasse 3
W-4650 Gelsenkirchen(DE)

(74) Vertreter: Andrejewski, Walter et al
Patentanwälte Andrejewski, Honke & Partner
Postfach 10 02 54 Theaterplatz 3
W-4300 Essen 1(DE)

## Beschreibung

Die Erfindung bezieht sich gattungsgemäß auf eine Anordnung für die Befestigung einer Kraftfahrzeugscheibe in der Zarge einer Kraftfahrzeugkarosserie mit auf den Scheibenrand der Kraftfahrzeugscheibe aufgesetztem Rahmen, der Formschlußelemente aufweist, an einem mehr oder weniger parallel zur Kraftfahrzeugscheibe verlaufenden Zargenflansch der Zarge angeordneten Formschlußgegenelemten und einem zwischen Kraftfahrzeugscheibe und Zargenflansch wirkenden weichelastischen Dichtungsprofil, wobei die mit dem Rahmen versehene Kraftfahrzeugsceibe mit ihren Formschlußelementen bei einer mehr oder weniger orthogonal zur Kraftfahrzeugscheibenoberfläche sowie zur Ebene des Zargenflansches erfolgenden Bewegung mit den Formschlußgegenelementen rastverbindbar ist. - Es versteht sich, daß der Rahmen die Kraftfahrzeugscheibe vollständig umgeben oder nur aus Teilstücken bestehen kann. Er kann auf beliebige Weise mit der Kraftfahrzeugscheibe fest verbunden sein. Insbesondere kann der Rahmen bereits bei der herstellung der Kraftfahrzeugscheibe auf den Rand der Kraftfahrzeugscheibe unlösbar aufgesetzt sein. Jedenfalls muß sichergestellt sein, daß störende Toleranzen bei der Vorbereitung der Kraftfahrzeugscheibe bzw. bei der Vorbereitung der Karosserie und der Zarge das Einsetzen der Kraftfahrzeugscheibe in die Zarge nicht beeinträchtigen.

Bei der bekannten gattungsgemäßen Ausführungsform (DE-A- 33 33 672) ist die Herstellung der Rahmenabschnitte, aus denen der Rahmen aufgebaut ist, beliebig. Die Formshlußelemente sind an den Rahmen nicht angeformt. Sie bestehen aus mit Abstand längs der Rahmenseite angeordneten Spreizclips, die mit Ultraschall an die Rahmenabschnitte angeschweißt sind. Die Formschlußgegenelemente sind Bohrungen in dem Zargenflansch, in die die Spreizclips eingeführt werden, wenn die Scheibe eingesetzt wird. Die Spreizclips müssen danach durch Spreizstifte gesichert werden. Die Spreizstifte sind entfernbar, wenn die Kraftfahrzeugscheibe demontiert werden soll. Das alles ist aufwendig. Insbesondere wenn der Rahmen bei der Herstellung der Kraftfahrzeugscheibe auf diese aufgesetzt wird und dort die Spreizclips aufgeschweißt werden, kann nicht ausgeschlossen werden, daß die Spreizclips aus Toleranzgründen nicht oder nicht genau genug in die Bohrungen passen, die in der Kraftfahrzeugfabrik in die Zargenflansche eingebracht wurden. Ein Toleranzausgleich ist nicht möglich. Insoweit bestehen bei der bekannten Ausführungsform störende Passungsprobleme. Das Dichtungsprofil ist zum Inneren der Fensteröffnung hin hinter dem Rahmen angeordnet. Folglich ist eine zusätzliche Dichtung zwischen Rahmen und Karosserie in Form eines besonderen Bauteils erforderlich, wenn der dort entstehende Spalt abgedichtet werden soll. Im Ergebnis ist die bekannte Ausführungsform wegen der Vielzahl der Bauteile und der fertigungstechnischen Maßnahmen sowie wegen der Passungsprobleme für eine automatische Massenproduktion wenig geeignet, (vgl. auch DE-A- 36 04 389).

Der Erfindung liegt die Aufgabe zugrunde, eine gattungsgemäße Anordnung so weiter auszubilden, daß mit wesentlich einfacheren Bauteilen gearbeitet werden kann, die einfach montiert werden können, und daß in bezug auf den Formschluß störende Passungsprobleme beim Einsetzen der Kraftfahrzeugscheibe une Zargenflansch der Kraftfahrzeugkarosserie ein Toleranzausgleich herbeigeführt werden kann.

Zur Lösung dieser Aufgabe lehrt die Erfindung, daß der Rahmen einteilig oder mehrteilig aus Rahmenabschnitten mit Formschlußelementen aufgebaut ist, die angeformt worden sind, daß die Formschlußgegenelemente an einer Winkelleiste angeformt sind, deren anderer Winkelflansch mit einer U-förmigen Aufnahme auf den Rand des Zargenflansches aufgesetzt ist, daß die Formschlußelemente und die Formschlußgegenelemente toleranzausgleichend ineinandersetzbar sind und daß das Dichtungsprofil zum Scheibenrand der Kraftfahrzeugscheibe hin an den Profilsteg des Rahmens angeschlossen ist. - Die Erfindung nutzt die Tatsache, daß an Profile in Längsrichtung verlaufende Formschlußelemente ohne einen besonderen Arbeitsgang (wie er zum Anschweißen der Spreizclips der bekannten Ausführungsform erforderlich ist) angeformt werden können. Das gilt insbesondere für im Wege des Spritzgießens erzeugte, an die Kraftfahrzeugscheibe angespritzte Profile. Sieht man entsprechende Formschlußgegenelemente vor, so vereinfacht sich die Fertigung der genannten Bauteile erheblich. Das erlaubt für die Bauteile und die angeformten Formschlußelemente eine sehr hohe Genauigkeit, die nicht aufgehoben wird, wenn die genau geformten Bauteile mit dem Rand der Kraftfahrzeugscheibe bzw. mit dem Zargenflansch verbunden werden. Die Toleranzen, die daraus resultieren, daß die Kraftfahrzeugscheibe sowie die Kraftfahrzeugkarosserie bzw. deren Zargenflansch geringe Ungenauigkeiten aufweisen, lassen sich ausgleichen, weil die Formschlußelemente und die Formschlußgegenelemente toleranzausgleichend verbindbar sind. Das kann auf vershiedene Weise erreicht werden. Eine Möglichkeit besteht darin, die genannten Bauteile ausreichend verformbar einzurichten. Eine andere Möglichkeit besteht darin, mehrere Formschlußstufen, z. B. mehrere Raststufen, vorzusehen. Ein zweiter Freiheitsgrad für den angestrebten Toleranzausgleich ergibt sich aus der Tatsache, daß die Winkelleiste mit ihrer U-förmigen Aufnahme auf den Zargenflansch unterschiedlich weit aufgeschoben werden kann. Folglich werden die beschriebenen Passungsprobleme erfingdungsgemäß weitergehend eliminiert. Es versteht sich, daß die Bauteile der erfindungsgemäßen Anordnung so auszulegen sind, daß alle auftretenden Beanspruchungen beim Betrieb des Kraftfahrzeuges aufgenommen werden und bei der Montage die Rastverbindung durch bloßes Ineinanderrasten funktionssicher hergestellt werden kann. Nichtsdestoweniger ist bei der erfindungsgemäßen Anordnung auf einfache Weise eine Demontage der Kraftfahrzeugscheibe mit dem aufgesetzten Rahmen möglich, wenn eine solche Demontage erforderlich ist. Zum Zwecke der Demontage genügt es, die Formschlußelemente und die Formschlußgegenelemente auseinanderzubiegen, was unter Kompression des Dichtungsprofils erfolgen kann und deshalb möglich ist, weil Rastverbindungen stets in ausreichendem Maße elastisch verformbar sind. Dabei kann in die in Rahmeneinrichtung mit Hilfe eines geeigneten Werkzeuges geöffnete Rastverbindung ein Blechstreifen oder ein ähnliches Bauteil eingelegt werden, welches die Formschlußelemente und die Formschlußgegenelemente in geöffnetem Zustand hält.

Im einzelnen bestehen im Rahmen der Erfindung mehrere Möglichkeiten der weiteren Ausbildung und Gestaltung. Im allgemeinen wird man die Anordnung so treffen, daß der Rahmen ein im Querschnitt im wesentlichen Z-förmiges Profil aufweist, welches mit dem Z-Steg und einem Z-Schenkel mit der Kraftfahrzeugscheibe verbunden ist, und daß der Z-Schenkel die Formschlußelemente aufweist. Gerade ein Profil dieses Querschnittes läßt sich im Wege des Strangpressens einfach und sehr genau herstellen. Der mit der Kraftfahrzeugscheibe verbundene Z-Schenkel kann dabei eine U-förmige Aufnahme besitzen, die auf den Scheibenrand aufgesetzt ist und damit gleichzeitig eine genaue Montage der Rahmenbauteile sicherstellt. Bei einer bevorzugten Ausführungsform der Erfindung weist der die Formschlußelemente tragende Z-Schenkel eine U-förmige Ausbildung auf, die innenseitig mit den Formschlußelementen versehen ist. In diesem Falle wird man auch die Winkelleiste mit Formschlußgegenelementen versehen, die in die U-förmige Ausbildung einfassen. Die Formschlußelemente sowie die Formschlußgegenelemente sind vorzugsweise als Sägeezahnelement ausgeführt. Das Dichtungsprofil wird man aus montagetechnischen Gründen mit dem Rahmen unlösbar verbinden. Das kann grundsätzlich durch eine Koextrusion erfolgen. Das kann aber auch durch Aufkleben geschehen. Jedenfalls sollte der Rahmen schon bei der Einrichtung der Kraftfahrzeugscheibe mit dem Dichtungsprofil ausgerüstet werden. Es versteht sich, daß das Dichtungsprofil nur dort an den Profilsteg des Rahmens angeschlossen ist, wo ein Rahmen vorhanden ist. Besteht der Rahmen nur aus Rahmenabschnitten, zwischen denen Abstände angeordnet sind, so wird in diesem Bereich das Dichtungsprofil im Bedarfsfall einen angeformten Flansch aufweisen, mit dem ein Spalt zwischen Kraftfahrzeugscheibenrand mit aufgesetztem Rahmen und Kraftfahrzeugkarosserie überbrückbar ist. Es versteht sich, daß man am Karosserieflansch oder an der Winkelleiste Aufrauhungen und Profilierungen vorsehen kann, um ein Abgleiten zu verhindern. Der weiche Rahmenteil kann, je nach den Gegebenheiten, mit dem harten Teil oder der Scheibe fest verbunden sein. Jedenfalls muß eine umlaufende Abdichtung sichergestellt sein. Im Rahmen der Erfindung liegt es, die Auslegung so zu treffen, daß die Winkelleiste auf dem Zargenflansch verschiebbar, jedoch bei eingerastetem Rahmen durch die Andrückkraft des weichelastischen Dichtungsprofils festsetzbar ist.

Die Bauteile der erfindungsgemäßen Einrichtung können aus den verschiedensten Werkstoffen hergestellt werden. Insbesondere besteht die Möglichkeit, den Rahmen sowie die Winkelleiste aus hartelastischem Kunststoff zu formen, ggf. mit Versteifungseinlagen. Das Dichtungsprofil kann als weichelastisches Kunststoffteil ausgeführt sein. Die weichen Rahmenteile können auch durch Hohlräume weichgestaltet sein. Von besonderem Vorteil ist die Tatsache, daß die Bauteile der erfindungsgemäßen Anordnung leicht hergestellt werden können, und zwar im Rahmen einer Massenfertigung. Insbesondere kann im Rahmen eines zweistufigen Spritzgießverfahrens sowohl der Rahmen an die Kraftfahrzeugscheibe angespritzt als auch das Dichtungsprofil erzeugt und mit dem Rahmen vereinigt werden. Dabei kann mit untershchiedlichen Werkstoffen gearbeitet werden. In die Spritzgießform können vorgefertigte Elemente der erfindungsgemäßen Anordnung eingelegt werden, z. B. die Formschlußelemente. Es versteht sich, daß die Bauteile des erfindungsgemäßen Aggregates auch im Wege des Strangpressens erzeugt und an die Kraftfahrzeugscheibe angeformt werden können.

Im folgenden wird die Erfindung anhand einer lediglich ein Ausfürhrungsbeispiel darstellenden Zeichnungen ausführlicher erläutert. Es zeigen in schematischer Darstellung

Fig. 1    in einem Querschnitt einen Ausschnitt aus einer Kraftfahrzeugkarosserie mit eingeformter Zarge und eingesetztem Kraftfahrzeugfenster bei erfindungsgemäßer Anordnung,

Fig. 2    eine andere Ausführungsform des Gegenstandes der Fig. 1.

Die in den Figuren dargestellte Anordnung dient für die Befestigung einer Kraftfahrzeugscheibe 1 in der Zarge einer Kraftfahr zeugkarosserie 2. Man erkennt in den Figuren zunächst einen auf dem Scheibenrand 3 der Kraftfahrzeugscheibe 1 aufgesetzten Rahmen 4, der Formschlußelemente 5 aufweist, einen mehr oder weniger parallel zur Kraftfahrzeugscheibe 1 verlaufenden Zargenflansch 6, an dem Formschlußgegenelemente 7 angeordnet sind, sowie ein zwischen Kraftfahrzeugscheibe 1 und Zargenflansch 6 wirkendes weichelastisches Dichtungsprofil 8. Die mit dem Rahmen 4 versehene Kraftfahrzeugscheibe 1 ist mit ihren Formschlußelementen 5 bei einer mehr oder weniger orthogonal zur Kraftfahrzeugscheibenoberfläche 9 sowie zur Ebene der Zargenflansche 6 erfolgenden Bewegung mit den Formschlußgegenelementen 7 rastverbindbar.

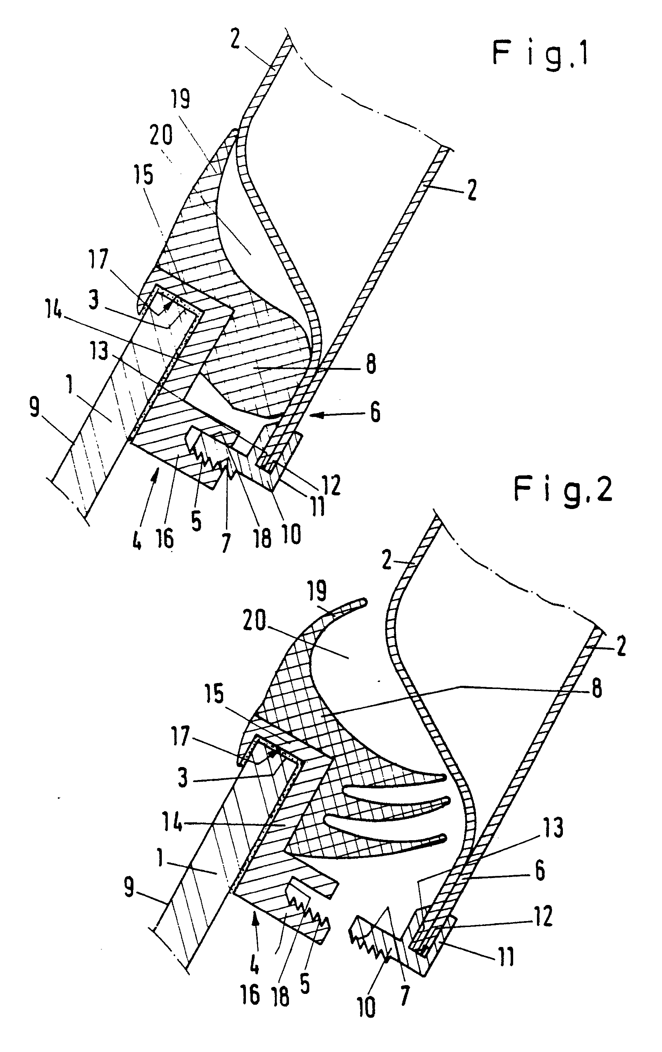

Der Rahmen 4 weist im Ausführungsbeispiel und nach bevorzugter Ausführungsform der Erfindung ein im Querschnitt im wesentlichen Z-förmiges Profil auf, welches mit dem Z-Steg 14 und einem Z-Schenkel 15 mit der Kraftfahrzeugscheibe 1 verbunden ist. Der andere Z-Schenkel 16 trägt die Formschlußelemente 5. Der mit der Kraftfahrzeugscheibe 1 verbundene Z-Schenkel 15 besitzt eine U-förmige Aufnahme 17, die auf den Scheibenrand 3 aufgesetzt ist und eine trichterförmige Öffnung aufweisen könnte, um das Einschieben des zugeordneten Bauteils der Winkelleiste zu erleichtern. Der die Formschlußelemente 5 tragende Z-Schenkel 16 ist im Ausführungsbeispiel ebenfalls mit einer U-förmigen Ausbildung 18 versehen und die Anordnung ist so getroffen, daß diese U-förmige Ausbildung 18 innenseitig die Formschlußelemente 5 trägt. Die Winkelleiste 10 weist die Formschlußgegenelemente 7 auf, die in die U-förmige Ausbildung 18 einfassen. Die Fig. 1 zeigt den verrasteten Zustand, die Fig. 2 erläutert die Verhältnisse unmittelbar vor dem Zusammenschieben der Formschlußelemente 5 und der Formschlußgegenelemente 7. Die Formschlußelemente 5 und die Formschlußgegenelemente 7 sind als Sägezahnelement aufgeführt.

Das Dichtungsprofil 8 ist im Ausführungsbeispiel mit dem Rahmen 4 unlösbar verbunden. Es weist einen angeformten Flansch 6 auf, mit dem ein Spalt 20 zwischen Scheibenrand 3 mit aufgesetztem Rahmen 4 und Kraftfahrzeugkarosserie 2 überbrückt bzw. überbrückbar ist.

Der Rahmen 4 sowie die Winkelleiste 10 bestehen z. B. aus hartelastischem Kunststoff, ggf. mit Versteifungseinlagen. Das Dichtungsprofil 8 kann aus weichelastischem Kunststoff gegossen sein.

Im Rahmen der Erfindung liegt es, nach dem Einsetzen der Kraftfahrzeugscheibe 1 und nach Herstellung der Rastverbindung in die entsprechenden Bauteile noch Sicherungsbolzen einzusetzen, die ein Lösen der Rastverbindung verhindern. Dazu werden entsprechende Bohrungen vorgesehen oder der Sicherungsbolzen wird eingeschossen. Die Aufnahme 12 der Winkelleiste 10 kann auf dem Zargenflansch zunächst verschiebbar sein, und zwar zum Zwecke des Toleranzausgleichs. Nach dem Einrasten des Rahmens 4 kann dann jedoch der eine Schenkel der Aufnahme 12 durch das weichelastische Profil 8 so fest gegen den Zargenflansch 6 gedrückt werden, daß die Scheibe 1 unverrückbar mit der Karosserie 2 verbunden ist.

## Ansprüche

1. Anordnung für die Befestigung eine Kraftfahrzeugscheibe (1) in der Zarge (2) einer Kraftfahrzeugkarosserie, - mit

   auf den Scheibenrand (3) der Kraftfahrzeugscheibe aufgesetztem Rahmen (4), der Formschlußelemente (5) aufweist,
   an einem parallel zur Kraftfahrzeugscheibe (1) vorlaufenden Zargenflansch (6) der Zarge angeordneten Formschlußgegenelementen (7) und
   einem zwischen Kraftfahrzeugscheibe (1) und Zargenflansch (6) wirkenden weichelastischen Dichtungsprofil (8), wobei die mit dem Rahmen (4) versehene Kraftfahrzeugscheibe (1) mit ihren Formschlußelementen (5) bei einer orthogonal zur Kraftfahrzeugscheibenoberfläche sowie zur Ebene des Zargenflansches (6) erfolgenden Bewegung mit den Formschlußgegenelementen (7) rastverbindbar ist, **dadurch gekennzeichnet,** daß der Rahmen (4) einteilig oder mehrteilig aus Rahmenabschnitten mit Formschlußelementen (5) aufgebaut ist, die angeformt worden sind, daß die Formschlußgegenelemente (7) an einer Winkelleiste (10) angeformt sind, deren anderer Winkelflansch (11) mit einer U-förmigen Aufnahme (12) auf den Rand (13) des Zargenflansches (6) aufgesetzt ist, daß die Formschlußelemente (5) sowie die Formschlußgegenelemente (7) toleranzausgleichend ineinandersetzbar sind und daß das Dichtungsprofil (8) zum Scheibenrand (3) der Kraftfahrzeugscheibe (1) hin an den Profilsteg (14) des Rahmens (4) angeschlossen ist.

2. Anordnung nach Anspruch 1, dadurch gekennzeichnet, daß der Rahmen (4) ein im Querschnitt im wesentlichen Z-förmiges Profil aufweist, welches mit dem Z-Steg (14) und einem Z-Schenkel (15) mit der Kraftfahrzeugscheibe (1) verbunden ist und daß der andere Z-Schenkel (16) die Formschlußelemente (5) aufweist.

3. Anordnung nach Anspruch 2, dadurch gekennzeichnet, daß der mit der Kraftfahrzeugscheibe (1) verbundene Z-Schenkel (15) eine U-förmige Aufnahme (17) besitzt, die auf den Scheibenrand (3) aufgesetzt ist.

4. Anordnung nach einem der Ansprüche 2 bis 3, dadurch gekennzeichnet, daß der die Formschlußelemente (5) tragende Z-Schenkel (16) eine U-förmige Ausbildung (18) aufweist, die innenseitig mit den Formschlußelementen (5) versehen ist.

5. Anordnung nach Anspruch 4, dadurch gekennzeichnet, daß die Winkelleiste (10) Formschlußgegenelemente (7) aufweist, die in die U-förmige Ausbildung (18) einfassen.

6. Anordnung nach einem der Ansprüche 1 bis 5, dadurch gekennzeichnet, daß die Formschlußelemente (5) und die Formschlußgegenelemente (7) als Sägezahnelemente ausgeführt sind.

7. Anordnung nach einem der Ansprüche 1 bis 6, dadurch gekennzeichnet, daß das Dichtungsprofil (8) mit dem Rahmen (4) unlösbar verbunden ist.

8. Anordnung nach einem der Ansprüche 1 bis 7, dadurch gekennzeichnet, daß das Dichtungsprofil (8) einen angeformten Flansch (19) aufweist, mit dem ein Spalt (20) zwischen Scheibenrand (3) mit aufgesetztem Rahmen (4) und Kraftfahrzeugkarosserie (2) überbrückbar ist.

9. Anordnung nach einem der Ansprüche 1 bis 8, dadurch gekennzeichnet, daß der Rahmen (4) sowie die Winkelleiste (10) aus hartelastischem Kunststoff geformt sind, ggf. mit Versteifungseinlagen, und daß das Dichtungsprofil (8) als weichelastisches Kunststoffteil geformt ist.

10. Anordnung nach einem der Ansprüche 1 bis 9, dadurch gekennzeichnet, daß die Winkelleiste (10) auf dem Zargenflansch (6) verschiebbar, jedoch bei eingerastetem Rahmen (4) durch die Andrückkraft des weichelastischen Dichtungsprofils (8) festsetzbar ist.

## Claims

1. A system for the anchorage of a motor vehicle window pane (1) into the frame surround (2) of a motor vehicle body - with a frame (4) that possesses shape-interlocking units (5), mounted on the edge (3) of the motor vehicle window pane, shape-interlocking units (7) located on a flange (6) of the frame surround that extends parallel to the motor vehicle window pane (1), and a soft elastic sealing profile (8) acting between the motor vehicle pane (1) and the flange (6) of the frame surround, in which the motor vehicle window pane (1) provided with the frame (4) and its shape-interlocking units (5) is connectable by detents with the shape-interlocking units (7) by a movement taking place perpendicularly to the surface of the motor vehicle window pane and to the plane of the flange (6) of the frame surround, characterized in that the frame (4) is composed of one or more frame sectors with shape-interlocking units (5) formed onto them, that the shape-interlocking units (7) are formed onto an angle strip (10) the other angular flange (11) of which is fitted by a U-shaped recess (12) onto the edge (13) of the frame surround flange (6), that the shape-interlocking units (5) and the shape-interlocking units (7) are locatable into one another, with tolerance compensation, and that the sealing profile (8) is attached from the edge (3) of the motor vehicle window pane (1) to the profile crosspiece (14) of frame (4).

2. A system according to Claim 1, characterized in that the frame (4) has a profile that in cross-section is basically Z-shaped, that is bonded to the motor vehicle window pane (1) by the Z-crosspiece (14) and one Z-shank (15), and that the other Z-shank (16) contains the shape-interlocking units (5).

3. A system according to Claim 2, characterized in that the Z-shank (15) that is bonded to the motor vehicle window pane (1) posseses a U-shaped recess (17) that is mounted onto the edge (3) of the window pane.

4. A system according to one of Claims 2 or 3, characterized in that the Z-shank (16) that carries the shapeinterlocking units (5) possesses a U-shaped formation (18) that is provided with the shape-interlocking units (5) on its internal surface.

5. A system according to Claim 4, characterized in that the angle strip (10) possesses shape-interlocking units (7) that lock into the U-shaped formation (18).

6. A system according to one of Claims 1 to 5, characterized in that the shape-interlocking units (5) and the shape-interlocking units (7) are constructed as saw-tooth units.

7. A system according to one of Claims 1 to 6, characterized in that the sealing profile (8) is undetachably bonded to the frame (4).

8. A system according to one of Claims 1 to 7, characterized in that the sealing profile (8) possesses a moulded-on flange (19) by which a gap (20) between the edge (3) of the window pane with the frame (4) mounted on it, and the motor vehicle body (2) is bridgeable.

9. A system according to one of Claims 1 to 8, characterized in·that the frame (4) and angle strip (10) are formed of hard elastic synthetic material, with internal reinforcements if required, and that the sealing profile (8) is formed as a soft elastic synthetic material component.

10. A system according to one of Claims 1 to 9, characterized in that the angle strip (10) is slidable onto the frame surround flange (6), yet when the frame (4) is snapped home it is fixable by the pressure of the soft elastic sealing profile (8).


**Revendications**

1. Dispositif de fixation d'une vitre (1) d'un véhicule automobile montée dans la baie (2) d'une carrosserie du véhicule automobile, comprenant

    un cadre (4), qui est monté sur le bord (3) de la vitre du véhicule automobile et possède des éléments (5) de liaison par formes complémentaires,

    des éléments antagonistes (7) de liaison par formes complémentaires, disposés sur une bride (6) de la baie, qui est Parallèle à la vitre (1) du véhicule automobile, et

    un profilé d'étanchéité en matériau élastique mou (8), qui agit entre la vitre (1) du véhicule automobile et la bride (6) de la baie, la vitre (1) du véhicule automobile, équipée du cadre (4), pouvant être réunie par encliquetage par ses éléments (5) de liaison par formes complémentaires aux éléments antagonistes (7) de liaison par formes complémentaires, lors d'un déplacement perpendiculairement à la surface de la vitre du véhicule ainsi qu'au plan de la bride (6) de la baie, caractérisé en ce que le cadre (4) est formé d'une partie ou de plusieurs parties constituées par des éléments du cadre, et comporte des éléments (5) de liaison par formes complémentaires qui ont été formés par moulage, que les éléments antagonistes (7) de liaison par formes complémentaires sont formés par moulage sur une équerre (10), dont l'autre aile (11) est emmanchée, au moyen d'un logement en forme de U (12) sur le bord (13) de la bride (6) de la baie, que les éléments (5) de liaison par formes complémentaires ainsi que les éléments antagonistes (7) de liaison par formes complémentaires peuvent être imbriqués en réalisant une compensation des tolérances et que le profilé d'étanchéité (8) est raccordé à la barrette profilée (14) du cadre (4), en direction du bord (3) de la vitre (1) du véhicule automobile.

2. Dispositif selon la revendication 1, caractérisé en ce que le cadre (4) possède un profilé sensiblement en forme de Z en coupe transversale, qui est relié par sa barre oblique (14) et par l'une (15) de ses branches à la vitre (1) du véhicule automobile, et que l'autre branche (16) du z porte les éléments (5) de liaison par formes complémentaires.

3. Dispositif selon la revendication 2, caractérisé en ce que la branche (15) du Z, reliée à la vitre (1) du véhicule automobile, possède un logement en forme de U (17), emmanché sur le bord (3) de la fenêtre.

4. Dispositif selon l'une des revendications 2 à 3, caractérisé en ce que la branche (16) du Z, qui porte les éléments (5) de liaison par formes complémentaires, possède une configuration en forme de U (18), qui est équipé, intérieurement, des éléments (5) de liaison par formes complémentaires.

5. Dispositif selon la revendication 4, caractérisé en ce que la cornière (10) porte des éléments antagonistes (7) de liaison par formes complémentaires, qui s'engagent dans la configuration en forme de U (18).

6. Dispositif selon l'une des revendications 1 à 5, caractérisé en ce que les éléments (5) de liaison par formes complémentaires et les éléments antagonistes (7) de liaison par formes complémentaires sont réalisés sous la forme d'éléments en dents de scie.

7. Dispositif selon l'une des revendications 1 à 8, caractérisé en ce que le profil d'étanchéité (8) est relié de façon inamovible au cadre (4).

8. Dispositif selon l'une des revendications 1 à 7, caractérisé en ce que le profilé d'étanchéité (8) possède une bride (19) formée par moulage, qui permet de fermer une fente (20) située entre le bord (3) de la vitre, sur lequel est emmanché le cadre (4), et la carrosserie (2) du véhicule automobile.

9. Dispositif selon l'une des revendications 1 à 8, caractérisé en ce que le cadre (4) ainsi que la cornière (10) sont réalisés en une matière plastique élastique dure et comportent éventuellement des inserts de renforcement, et que le profilé d'étanchéité (8) est réalisé sous la forme d'une pièce en matière plastique élastique molle.

10. Dispositif selon l'une des revendications 1 à 9, caractérisé en ce que la cornière (10) peut être déplacée sur la bride (6) de la baie, mais peut être bloqué par la force de serrage du profilé d'étanchéité élastique mou (8), lorsque le cadre (4) est à l'état encliqueté.

EP 0 268 815 B1

Fig.1

Fig.2

8